# EUROPEAN PATENT APPLICATION

(11) **EP 3 955 182 A1**
(43) Date of publication of application: **16.02.2022**
(21) Application number: 21185292.6
(22) Date of filing: 13.07.2021
(51) Int. Cl.: G06Q 10/00, G06Q 10/06, G06Q 50/30

(54) **SYSTEM FOR MANAGING THE CAPACITY OF A PUBLIC VEHICLE**

(30) Priority: 12.08.2020 IT 202000020086
(71) Applicant: Techrail Srl, 70124 Bari (BA) (IT)
(72) Inventor: MANCINI, VITO, 70124 BARI (BA) (IT)
(74) Representative: Giuliano, Natalia

(57) **Abstract**

System (100) for managing the capacity of a transportation vehicle comprising at least a pair of units (100a). Each unit (100a) comprising: at least one stereographic sensor (101) provided with a proprietary firmware to perform a real-time 3D-mapping of the interior of a carriage of the public transportation vehicle; a block (102) for processing a signal generated by the at least one stereographic sensor (101); an alarm system activated by the block (102) and able to signal if the number of people detected or their mutual distance do not fall within a predetermined range; a centralized server connected to the block (102); a block for locally storing the detected data concerning the number of people and their mutual distance.
Each unit (100a) is configured to analyze the space concerning one half of the carriage of the public transportation vehicle.

## Description

The present invention relates to a system for managing the capacity of a public vehicle.

Furthermore, the present invention relates to a method for managing the capacity of a public vehicle.

In particular, the present invention relates to a system and a method for managing the capacity of a public vehicle of the type that can be used to monitor the presence of users on a public vehicle, underground, bus or railway carriage, and their mutual distance.

As is known, the cars that make up a public transport, such as buses, trains, subways, are equipped with people counters and two cameras. The application of this technology in the context of cars involves the installation of one or more stereo camera systems to optimally cover the interior space. The stereo cameras are able to perform the 3D reconstruction of the environment.

In particular, in emergency situations due, for example, to a pandemic such as the current one of COVID19, it is necessary to equip these cars in such a way as to ensure social distancing and avoid crowding situations. Therefore, in the context of metropolitan and railway transport, it is necessary to be able to determine not only the number of people waiting on the boarding platforms (stations) but above all the level of occupancy of the cars. This leads to having to solve two specific problems:
- determine the exact number of people inside the car;
- determine if inside the car people maintain the social distancing required by law or by prevention regulations.

The first problem has already been addressed in other contexts, such as inside a bus, access to museums, etc. and the most flexible and functional solution was the installation of people counters based on optical technology. In fact, by placing a pager on each gate, it is possible to determine exactly the number of people crossing the gate itself.

However, even if effective, people counting systems are unable to determine the way a car is occupied and, above all, the relative distances between people. It is obvious that to carry out this detection it is necessary to install a system inside the car that can analyze the entire interior space. Traditional video surveillance systems, already installed for the internal monitoring of cars, do not allow the estimation of the distance between people. The solution to this problem can be to use 3D systems, that are systems capable of carrying out a three-dimensional reconstruction of the internal space. These systems are divided into active and passive. Active systems such as "Light Detection and Ranging or Laser Imaging Detection and Ranging", also called LIDAR, allow you to perform a 3D reconstruction, by estimating the time of flight, or "time-of-flight", of a laser point. However, to perform the 3D reconstruction, these systems need a mechanical scan of the entire environment and for this reason they are slow and do not allow real-time estimation.

Another type of technology used is that of Time-of-Flight cameras which consist of a camera and a lighting system (laser or LED). However, although these cameras allow a 3D reconstruction of the environment, they are strongly influenced by the ambient lighting conditions.

The purpose of the present invention is to provide a system and a method for managing the capacity of a public vehicle capable of recognizing the shape of people, their number and mutual distance, thus having characteristics such as to overcome the limits of current systems and known methods.

According to the present invention, a system is provided for managing the capacity of a public vehicle, as defined in claim 1.

Furthermore, according to the present invention, a method is provided for managing the capacity of a public vehicle, as defined in claim 3.

For a better understanding of the present invention, a preferred embodiment is now described, purely by way of non-limiting example, with reference to the attached drawings, in which:

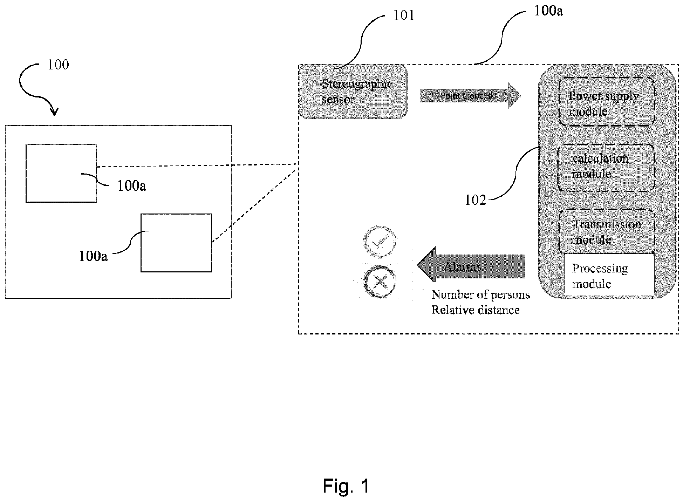

- Figure 1 shows a system to manage the capacity of a public transport, according to the invention;
- Figure 2 shows a system for calculating the mutual distances of the system to manage the capacity of a public transport, according to the invention.

With reference to this figure, a system 100 to manage the capacity of a public transport is shown, according to the invention.

The system 100 comprises at least a pair of units 100a, independent of each other, connected to a WIFI network and accessible from the outside via an LTE connection. Each unit 100a comprises:
- a stereographic sensor 101 to perform the 3D map of the interior of a carriage, or wagon, of a public transport in real time;
- a processing block 102 for processing the signal coming from the sensor, configured to perform the functions of powering the sensor, processing the acquired data and transferring them to a data network for consultation by users, comprising a power supply module 102a, a calculation module 102b and a module for transmitting the processed signals 102c to a centralized server for storing and managing the data and reading it by the users;

- a block for local data storage;
- an alarm system capable of signaling if the number of people detected and / or the mutual distance between them do not fall within a predetermined range.

The system 100 is configured to provide an alarm relating to the number of people and the mutual distance between people. In addition, the system 100 comprises dedicated software that by analyzing the 3D map is able to recognize the shape of people, their number and distance from each other.

Advantageously according to the invention, each unit 100a is configured to analyze the space relating to half of the carriage of the means of transport.

Advantageously according to the invention, the stereoscopic sensor 101 is equipped with a proprietary firmware that allows you to perform the 3D reconstruction ("point cloud 3D") of the environment and of all the people and objects present.

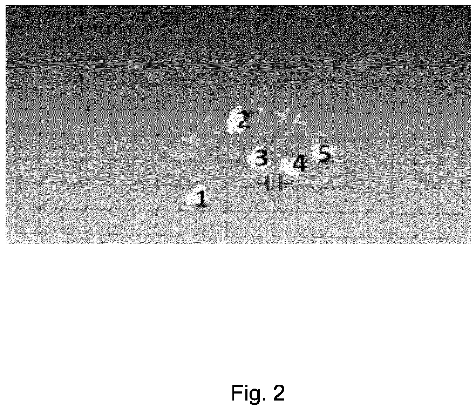

In use, the system 100 carries out a detection at regular time intervals, determining the number of users present in a limited space of a means of transport and the mutual distances between them. After n measurements have been carried out, all the data relating to the measurements carried out are integrated and a definitive estimate is made, the results of which are stored in a database and can be consulted remotely via the WEB interface. The three-dimensional reference system of the reconstruction is integral with the reference space in particular with the carriage (with origin in the center of the carriage, or in a corner). The proprietary software analyzes the "3D point cloud" provided by the stereographic sensor 101, recognizes the shapes relating to people, or users, (no color image is acquired to protect privacy), determines the position of each shape and places them in an occupancy grid, shown in figure 2. The occupancy grid is a discretization of the carriage floor into square cells. Each person is identified in the occupancy grid with a cross whose color indicates whether the mutual distance measured between the person considered and others detected in the vicinity is correct according to the set spacing rules and the preset acceptable range of distances. The proprietary software also determines the number of people present in the carriage (people counting function) at each detection.

As stated above, the present invention also refers to a method for managing the capacity of a public vehicle.

In particular, the method comprises the steps of:
- Processing up to 90 Point Clouds per minute starting from the initial 3D scene;
- extrapolating the silhouettes of the people present;
- observing the scene from a plurality of points of view;
- Calculating the number of people.

According to one aspect of the invention, the method comprises the step of:
- performing a projection on a reticulated plane, or occupation grid, where people are highlighted as a geometric center of gravity and then their mutual distances are evaluated by comparing them with a predetermined and acceptable range;
- activating an alarm when people are at a mutual distance less than a predetermined value D, for a time greater than a predetermined value t, preferably the alarm is activated for a relative distance detected less than X meters (where X is a value included between 0.3 m and 2.5 m, preferably X is equal to 1 meter, e.g. 0.8 m) for a time greater than 5 seconds.

According to an aspect of the invention, the alarm is activated when people are at a mutual distance D less than X meters, where X is not less than 1 meter, for a time t greater than 5 seconds.

Therefore, the system and method for managing the capacity of a public transport according to the invention make it possible to accurately ascertain the identification of the encumbrances with people and number the people with a zero margin of error, and calculate the mutual distances.

Another advantage of the system and method for managing the capacity of a public transport according to the invention is that it is precise.

Finally, it is clear that modifications and variations can be made to the system and method for managing the capacity of a public vehicle according to the invention described and illustrated here without departing from the protective scope of the present invention, as defined in the attached claims.

## Claims

1. System (100) for managing the capacity of a transportation vehicle comprising at least a pair of units (100a), independent from each other, connected to a Wi-Fi network and able to be reached from the outside by means of an LTE connection, **characterized in that** that each unit (100a) comprises:
- at least one stereographic sensor (101) provided with a proprietary firmware to perform a real-time 3D-mapping of the interior of a carriage of the public transportation vehicle;
- a block (102) for processing a signal generated by the at least one stereographic sensor (101), comprising a power supply module (102a), a calculation module (102b) and a transmission module of the processed signals (102c), and including a specific software configured to analyze the 3D map and recognize a silhouette of people, the number of people present and their mutual distance;
- an alarm system activated by the block (102) and able to signal if the number of people detected or their mutual distance do not fall within a predetermined range;
- a centralized server connected to the block (102) by means of a data network, said centralized server being configured for storing and managing data received from the transmission module of the processed signals (102c) and for the consultation of the data by users;
- a block for locally storing the detected data concerning the number of people and their mutual distance; each unit (100a) being configured to analyze the space concerning one half of the carriage of the public transportation vehicle.

2. System (100) according to claim 1, **characterized in** comprising at least one high resolution color camera.

3. Method for managing the capacity of a public transportation vehicle, comprising the steps of:
- processing up to 90 Point Clouds per minute starting from an initial 3D scene;
- extrapolating the silhouettes of the people present;
- watching the scene from a plurality of points of view;
- calculating the number of people;
- activating an alarm when people are at a mutual distance D shorter than X meters, where X is not less than 1 meter, for a time t longer than 5 seconds.

4. Method according to claim 3, **characterized in that** the step of calculating the number of people includes performing a projection on an occupancy grid where the people detected as geometric center of gravity are highlighted, detecting the mutual distances between people on said occupancy grid and comparing said mutual distances with prefixed ranges.
